# EUROPEAN PATENT APPLICATION

(11) **EP 4 354 381 A1**
(43) Date of publication of application: **17.04.2024**
(21) Application number: 21945242.2
(22) Date of filing: 03.12.2021
(51) Int. Cl.: G06Q 50/10

(54) **PROCESSING DEVICE, PROCESSING METHOD, AND PROGRAM**

(30) Priority: 08.06.2021 JP 2021095759
(71) Applicant: NEC Corporation, 108-8001 Tokyo (JP)
(72) Inventor: HAYASHI Haruyuki, Tokyo 108-8001 (JP)
(74) Representative: Betten & Resch
(86) International application number: PCT/JP2021/044499
(87) International publication number: WO 2022/259573

(57) **Abstract**

The present invention provides a processing apparatus (10) including: a first collation unit (14) that performs first collation processing of collating license plate information of an exiting vehicle with license plate information of an entering vehicle; a first determination unit (15) that determines, when both of a result of the first collation processing and reliability of the license plate information meet a criterion, the entering vehicle being a vehicle identical with the exiting vehicle, based on the result of the first collation processing; a second collation unit (16) that performs, when at least one of the result of the first collation processing and the reliability of the license plate information does not meet the criterion, second collation processing of collating supplemental information of the exiting vehicle with the supplemental information of the entering vehicle; and a second determination unit (17) that determines, when at least one of the result of the first collation processing and the reliability of the license plate information does not meet the criterion, the entering vehicle being a vehicle identical with the exiting vehicle, based on the result of the first collation processing and a result of the second collation processing.

## Description

### Technical Field

The present invention relates to a processing apparatus, a processing method, and a program.

### Background Art

Techniques relating to the present invention are disclosed in Patent Documents 1 to 3.

Patent Document 1 discloses a technique of performing collation processing of a vehicle, based on information on a license plate of the vehicle and feature information (a vehicle name, a vehicle type, a model, a vehicle color, and the like) of the vehicle, and performing adjustment processing for a parking lot, a toll road, and the like, based on a collation result.

Patent Document 2 discloses a parking lot management system that performs collation processing of a vehicle, based on number data of the vehicle and face data of a passenger, and determines a parking fee, based on a collation result.

Patent Document 3 discloses a technique of performing collation processing of a vehicle, based on a result of analyzing a number, a result of analyzing a type and a color of the vehicle, a result of analyzing a face of a passenger, and a result of analyzing a number of passengers, and detecting, from within an image, a vehicle being a search target.

### Related Document

### Patent Document

Patent Document 1: International Patent Publication No. WO2021/075278
Patent Document 2: Japanese Patent Application Publication No. 2006-338479
Patent Document 3: Japanese Patent Application Publication No. 2020-191509

### Disclosure of the Invention

### Technical Problem

For a toll road, a parking lot, and the like, correspondence between an entering vehicle and an exiting vehicle needs to be determined. "Determination of correspondence" is to determine an exiting vehicle being identical with an entering vehicle. For example, a technique for determining correspondence between an entering vehicle and an exiting vehicle by using license plate information is known. However, accuracy of reading the license plate information is not 100%. When only license plate information is used, there is a problem that correct correspondence between an entering vehicle and an exiting vehicle cannot be determined when the license plate information is not read correctly.

As disclosed in Patent Documents 1 to 3, the above described problem can be reduced by using a technique of performing collation utilizing a feature of a vehicle, a feature of a passenger, and the like, in addition to license plate information. However, when an amount of data utilized for collation increases, a new problem arises that a processing burden on a computer becomes heavy.

An object of the present invention is to provide a technique for accurately determining correspondence between an entering vehicle and an exiting vehicle while reducing inconvenience of a heavy processing burden on a computer.

### Solution to Problem

According to the present invention, a processing apparatus is provided, including:
an entry processing means for acquiring license plate information of an entering vehicle and supplemental information related to the entering vehicle, associating the license plate information and the supplemental information with each other, and storing the associated information in a storage means;
an exit acquisition means for acquiring the license plate information and the supplemental information of an exiting vehicle;
a first collation means for performing first collation processing of collating the license plate information of the exiting vehicle with the license plate information of the entering vehicle stored in the storage means;
a first determination means for determining, when both of a result of the first collation processing and reliability of the license plate information meet a criterion, the entering vehicle being a vehicle identical with the exiting vehicle, based on the result of the first collation processing;
a second collation means for performing, when at least one of the result of the first collation processing and the reliability of the license plate information does not meet the criterion, second collation processing of collating the supplemental information of the exiting vehicle with the supplemental information of the entering vehicle stored in the storage means; and
a second determination means for determining, when at least one of the result of the first collation processing and the reliability of the license plate information does not meet the criterion, the entering vehicle being a vehicle identical with the exiting vehicle, based on the result of the first collation processing and a result of the second collation processing.

Further, according to the present invention, a processing method is provided, including,
by a computer executing:
an entry processing step of acquiring license plate information of an entering vehicle and supplemental information related to the entering vehicle, associating the license plate information and the supplemental information with each other, and storing the associated information in a storage means;
an exit acquisition step of acquiring the license plate information and the supplemental information of an exiting vehicle;
a first collation step of performing first collation processing of collating the license plate information of the exiting vehicle with the license plate information of the entering vehicle stored in the storage means;
a first determination step of determining, when both of a result of the first collation processing and reliability of the license plate information meet a criterion, the entering vehicle being a vehicle identical with the exiting vehicle, based on the result of the first collation processing;
a second collation step of performing, when at least one of the result of the first collation processing and the reliability of the license plate information does not meet the criterion, second collation processing of collating the supplemental information of the exiting vehicle with the supplemental information of the entering vehicle stored in the storage means; and
a second determination step of determining, when at least one of the result of the first collation processing and the reliability of the license plate information does not meet the criterion, the entering vehicle being a vehicle identical with the exiting vehicle, based on the result of the first collation processing and a result of the second collation processing.

Further, according to the present invention, a program is provided, causing a computer to function as:
an entry processing means for acquiring license plate information of an entering vehicle and supplemental information related to the entering vehicle, associating the license plate information and the supplemental information with each other, and storing the associated information in a storage means;
an exit acquisition means for acquiring the license plate information and the supplemental information of an exiting vehicle;
a first collation means for performing first collation processing of collating the license plate information of the exiting vehicle with the license plate information of the entering vehicle stored in the storage means;
a first determination means for determining, when both of a result of the first collation processing and reliability of the license plate information meet a criterion, the entering vehicle being a vehicle identical with the exiting vehicle, based on the result of the first collation processing;
a second collation means for performing, when at least one of the result of the first collation processing and the reliability of the license plate information does not meet the criterion, second collation processing of collating the supplemental information of the exiting vehicle with the supplemental information of the entering vehicle stored in the storage means; and
a second determination means for determining, when at least one of the result of the first collation processing and the reliability of the license plate information does not meet the criterion, the entering vehicle being a vehicle identical with the exiting vehicle, based on the result of the first collation processing and a result of the second collation processing.

### Advantageous Effects of Invention

According to the present invention, correspondence between an entering vehicle and an exiting vehicle can be accurately determined while reducing inconvenience of a heavy processing burden on a computer.

### Brief Description of the Drawings

[Fig. 1] It is a diagram illustrating one example of a hardware configuration of a processing apparatus according to the present example embodiment.
[Fig. 2] It is a diagram illustrating one example of a functional block diagram of the processing apparatus according to the present example embodiment.
[Fig. 3] It is a diagram schematically illustrating one example of information processed by the processing apparatus according to the present example embodiment.
[Fig. 4] It is a diagram illustrating one example of a flow of processing performed by the processing apparatus according to the present example embodiment.
[Fig. 5] It is a diagram illustrating one example of a flow of processing performed by the processing apparatus according to the present example embodiment.
[Fig. 6] It is a diagram illustrating one example of a flow of processing performed by the processing apparatus according to the present example embodiment.
[Fig. 7] It is a diagram illustrating one example of a functional block diagram of the processing apparatus according to the present example embodiments.
[Fig. 8] It is a diagram schematically illustrating one example of information processed by the processing apparatus according to the present example embodiment.
[Fig. 9] It is a diagram illustrating one example of a flow of processing performed by the processing apparatus according to the present example embodiment.
[Fig. 10] It is a diagram illustrating one example of a functional block diagram of the processing apparatus according to the present example embodiments.

### Description of Embodiments

In the following, example embodiments of the present invention will be described with reference to the drawings. Note that, in all the drawings, a similar component is denoted with a similar reference sign, and description thereof is omitted as appropriate.

### <First Example Embodiment>

### "Outline"

First, an outline of a processing apparatus according to the present example embodiment will be described. A detailed description of the processing apparatus according to the example embodiment will be given later.

The processing apparatus according to the present example embodiment determines correspondence between an entering vehicle and an exiting vehicle through collation processing based on license plate information and supplemental information. The supplemental information is information that can be used in identification of a vehicle, and is information different from the license plate information.

Further, the processing apparatus reduces inconvenience of a heavy processing burden on a computer by performing the collation processing based on the license plate information and the supplemental information in a distinctive flow. In the collation processing, the processing apparatus first performs collation based on the license plate information. Then, when both of reliability of a reading result of the license plate information and a collation score of the license plate information meet a predetermined criterion, the processing apparatus determines correspondence between an entering vehicle and an exiting vehicle, based on a collation result of the license plate information. In this case, collation based on the supplemental information is not performed.

On the other hand, at least one of the reliability of the reading result of the license plate information and the collation score of the license plate information does not meet the predetermined criterion, the processing apparatus performs collation based on the supplemental information. Then, the processing apparatus determines correspondence between the entering vehicle and the exiting vehicle, based on the collation result of the license plate information and a collation result of the supplemental information.

Thus, according to the processing apparatus that performs vehicle collation by utilizing other supplemental information in addition to license plate information, correspondence between an entering vehicle and an exiting vehicle can be accurately determined. Further, in a case of the processing apparatus according to the present example embodiment, since the collation based on the supplemental information is performed only when necessary, the processing burden on the computer can be reduced.

### "Hardware Configuration"

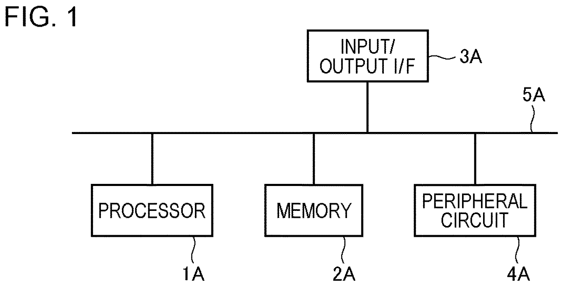

Next, one example of a hardware configuration of the processing apparatus will be described. Fig. 1 is a diagram illustrating a hardware configuration example of the processing apparatus. Each functional unit included in the processing apparatus is achieved by any combination of hardware and software, mainly a central processing unit (CPU) of any computer, a memory , a program loaded onto the memory, a storage unit (capable of storing a program downloaded from a storage medium such as a compact disc (CD) or a server on the Internet, as well as a program preliminarily stored since a stage of shipping an apparatus) storing the program, such as a hard disk, and an interface for network connection. Further, it is understood by a person skilled in the art that there are various modification examples for a method and an apparatus for achieving each functional unit.

As illustrated in Fig. 1, the processing apparatus includes a processor 1A, a memory 2A, an input/output interface 3A, a peripheral circuit 4A, and a bus 5A. The peripheral circuit 4A includes various modules. The processing apparatus may not include the peripheral circuit 4A. Note that, the processing apparatus may be configured of a plurality of apparatuses that are physically and/or logically separated, or may be configured of a single apparatus that is physically and logically integrated. When the processing apparatus is configured of a plurality of apparatuses that are physically and/or logically separated, each of the plurality of apparatuses may include the above-described hardware configuration.

The bus 5A is a data transmission path for the processor 1A, the memory 2A, the peripheral circuit 4A, and the input/output interface 3A to transmit and receive data to and from one another. The processor 1A is, for example, an arithmetic processing apparatus such as a CPU and a graphics processing unit (GPU). The memory 2A is, for example, a memory such as a random access memory (RAM) and a read only memory (ROM). The input/output interface 3A includes an interface for acquiring information from an input apparatus, an external apparatus, an external server, an external sensor, and the like, interface for outputting information to an output apparatus, an external apparatus, an external server, and the like, and the like. The input apparatus is, for example, a keyboard, a mouse, a microphone, and the like. The output apparatus is, for example, a display, a speaker, a printer, a mailer, and the like. The processor 1A can issue a command to each module and perform arithmetic operation based on a result of arithmetic operation by each module.

### "Functional Configuration"

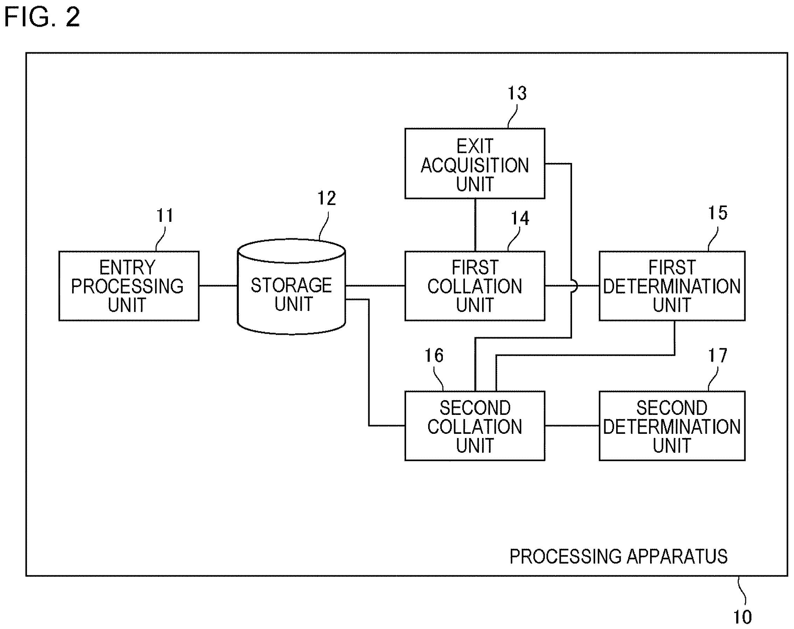

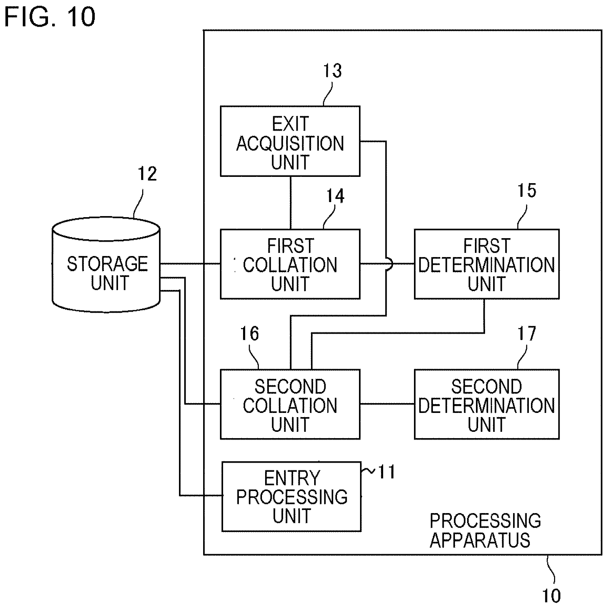

Next, a functional configuration of the processing apparatus will be described. One example of a functional block diagram of a processing apparatus 10 is illustrated in Fig. 2. As illustrated, the processing apparatus 10 includes an entry processing unit 11, a storage unit 12, an exit acquisition unit 13, a first collation unit 14, a first determination unit 15, a second collation unit 16, and a second determination unit 17. Note that, as illustrated in Fig. 10, the processing apparatus 10 may not include the storage unit 12. In this case, an external apparatus configured in such a way as to be communicable with the processing apparatus 10 includes the storage unit 12.

The entry processing unit 11 acquires license plate information of an entering vehicle and supplemental information related to the entering vehicle, associates the license plate information and the supplemental information with each other, and stores the associated information in the storage unit 12.

An "entering vehicle" is a vehicle that enters a facility. The processing apparatus 10 is used, for example, in a facility in which a vehicle that enters and a vehicle that exits need to be managed. An example of such a facility includes, but is not limited to, a toll road, a parking lot, and a store, factory, and the like where a large number of delivery vehicles enter and exit.

"License plate information" is information that can be acquired from a license plate attached to a vehicle. For example, license plate information can indicate at least one of a location of a transport bureau branch office or a motor vehicle inspection and registration office, a classification number, a designated serial number, an application division, a plate background color, and a plate text color.

Acquisition of such license plate information is achieved by utilizing any technique. For example, a camera installed at an entrance gate or the like through which an entering vehicle passes captures a license plate of the entering vehicle. Then, I entry processing unit 11 analyzes an image generated by the camera, and thereby acquires license plate information.

"Supplemental information" is information that can be utilized in identification of a vehicle, and is information different from license plate information. A specific example of supplemental information will be described in the following example embodiment.

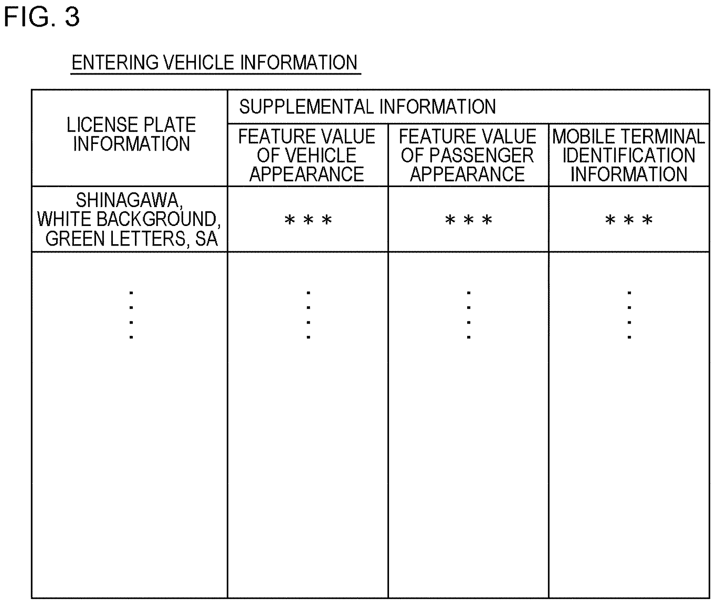

One example of entering vehicle information stored in the storage unit 12 is schematically illustrated in Fig. 3 . As illustrated, the entering vehicle information is information constituted of the license plate information and the supplemental information that are associated with each other.

Returning to Fig. 2, the exit acquisition unit 13 acquires license plate information and supplemental information of an exiting vehicle.

An "exiting vehicle" is a vehicle exiting the facility.

The license plate information and the supplemental information are as describes above. Acquisition of the license plate information and the supplemental information of an exiting vehicle is achieved through a similar means as that of the above-described acquisition of the license plate information and the supplemental information of the entering vehicle. For example, acquisition of the license plate information and the supplemental information of the exiting vehicle is achieved by analyzing an image generated by a camera installed at an exit gate and the like through which the exiting vehicle passes, and the like.

The first collation unit 14 performs first collation processing of collating the license plate information of the exiting vehicle with each piece of license plate information of entering vehicles stored in the storage unit 12 (see Fig. 3). Further, the first collation unit 14 computes a first collation score for each pair of the exiting vehicle and each entering vehicle. The first collation score indicates a matching degree of the license plate information. A computation algorithm for the first collation score is not specifically limited. For example, when the license plate information indicates a plurality of items among a location of a transport bureau branch office or a motor vehicle inspection and registration office, a classification number, a designated serial number, an application division, a plate background color, and a plate text color, the first collation score may be computed according to the number of matched items. In this case, the larger the number of matched items, the higher the first collation score is computed. Further, weighting values may be preliminarily set for a plurality of the items, and the higher the weighting value of the matched items, the higher the first collation score may be computed.

When both of a result of the first collation processing and reliability of the license plate information meet a criterion, the first determination unit 15 determines the entering vehicle being a vehicle identical with the exiting vehicle, based on the result of the first collation processing.

"Reliability of license plate information" is reliability of license plate information read in an image analysis, and is sometimes referred to a confidence degree. A computation algorithm for the reliability is not specifically limited, and any technique depending on an image analysis algorithm can be employed. For example, when a number or a character is read by using a text recognition technique, reliability may be computed based on a similarity and the like between text in an image and a template. In this case, the higher the similarity, the higher the reliability. Alternatively, reliability may be computed based on a factor that may affect image quality, such as a time period and a weather condition when the image is captured. In this case, the license plate information read from an image captured under a condition that provides better image quality has higher reliability.

A "criterion for reliability of license plate information" is a lower limit value of the reliability on which correspondence between an entering vehicle and an exiting vehicle is allowable to be determined based on the license plate information only and without using supplemental information. Note that, a condition for "reliability of the license plate information meets the criterion" is preferably "both of the reliability of the license plate information of the entering vehicle and the reliability of the license plate information of the exiting vehicle meet the criterion". However, depending on a performance requirement for the processing apparatus 10, the condition may be "at least one of the reliability of the license plate information of the entering vehicle and the reliability of the license plate information of the exiting vehicle meets the criterion".

A "result of first collation processing" is a first collation score of license plate information of an exiting vehicle and license plate information of each entering vehicle.

A "criterion for a result of first collation processing" indicates a condition on which correspondence between an entering vehicle and an exiting vehicle is allowable to be determined based on a result of the first collation processing only and without using a collation result of supplemental information. An example of the condition includes, for example, "a pair of an exiting vehicle and an entering vehicle of which first collation score in the first collation processing is equal to or more than a threshold value is present, "only one pair of an exiting vehicle and an entering vehicle of which first collation score in the first collation processing is equal to or more than the threshold value is present", and the like, but is not limited thereto. The threshold value of the first collation score indicates a lower limit value of the first collation score on which correspondence between an entering vehicle and an exiting vehicle is allowable to be determined based on a result of the first collation processing only and without using a collation result of supplemental information.

When both of the result of the first collation processing and the reliability of the license plate information meet the criterion, the first determination unit determines a pair of an exiting vehicle and an entering vehicle having the highest first collation score of the first collation processing. Further, the first determination unit 15 determines that the entering vehicle of the determined pair is a vehicle identical with the exiting vehicle of the determined pair. Specifically, the first determination unit 15 determines that the entering vehicle and the exiting vehicle of the determined pair are the same vehicle.

When at least one of the result of the first collation processing and the reliability of the license plate information does not meet the above-described criterion, the second collation unit 16 performs second collation processing of collating the supplemental information of the exiting vehicle with each piece of supplemental information of the entering vehicles stored in the storage unit 12 (see Fig. 3).

When at least one of the result of the first collation processing and the reliability of the license plate information does not meet the above-described criterion, the second determination unit 17 determines an entering vehicle being a vehicle identical with the exiting vehicle, based on the result of the first collation processing and a result of the second collation processing.

Next, one example of a flow of processing performed by the processing apparatus 10 will be described. Note that, an object herein is to describe a processing flow. Since details of the processing has been described above, description thereof is omitted herein as appropriate.

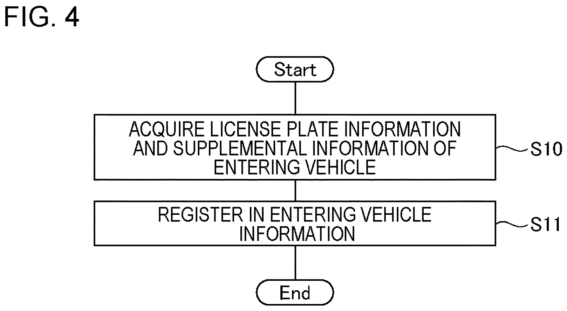

First, the processing executed when a vehicle enters a facility will be descried with reference to a flowchart in Fig. 4.

The processing apparatus 10 acquires license plate information and supplemental information of an entering vehicle (S10). For example, acquisition of the license plate information and the supplemental information of the entering vehicle by the processing apparatus 10 is achieved by analyzing an image generated by a camera installed at an entrance gate and the like through which the entering vehicle passes, and the like.

Next, the processing apparatus 10 associates the acquired license plate information and the supplemental information with each other, and registers the associated information in entering vehicle information (see Fig. 3) stored in the storage unit 12 (S 11).

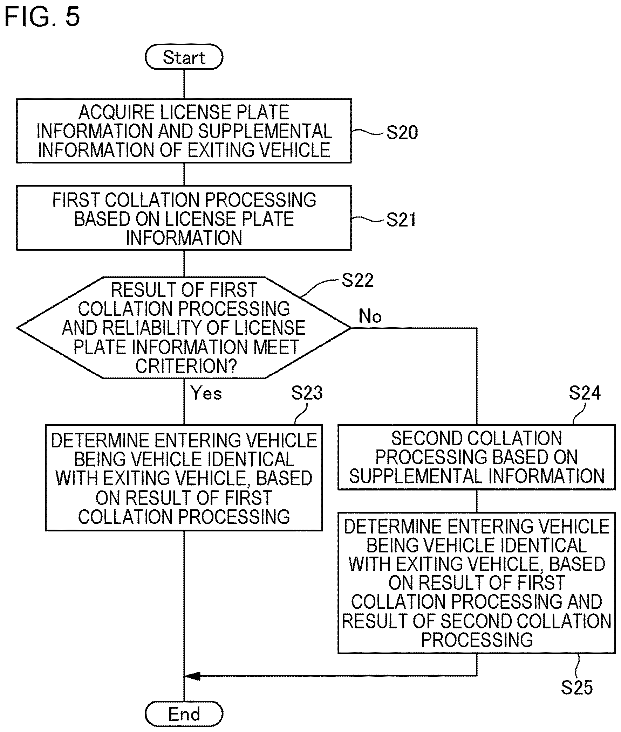

Next, the processing executed when a vehicle exits from the facility will be described with reference to a flowchart in Fig. 5.

The processing apparatus 10 acquires license plate information and supplemental information of an exiting vehicle (S20). For example, acquisition of the license plate information and the supplemental information of the exiting vehicle by the processing apparatus 10 is achieved by analyzing an image generated by a camera installed at an exit gate and the like through which the exiting vehicle passes, and the like.

Next, the processing apparatus 10 executes first collation processing of collating the license plate information of the exiting vehicle with the license plate information of each entering vehicle registered in the entering vehicle information stored in the storage unit 12 (S21).

When both of a result of the first collation processing and reliability of the license plate information meet a criterion (Yes in S22), the processing apparatus 10 determines an entering vehicle being a vehicle identical with the exiting vehicle, based on the result of the first collation processing in S21 (S23). Specifically, the processing apparatus 10 determines a pair of the exiting vehicle and the entering vehicle having the highest first collation score of the first collation processing. Then the processing apparatus 10 determines that the entering vehicle of the determined pair is a vehicle being identical with the exiting vehicle.

On the other hand, when at least one of the result of the first collation processing and the reliability of the license plate information does not meet the criterion (No in S22), the processing apparatus 10 executes second collation processing of collating the supplemental information of the exiting vehicle with the supplemental information of each entering vehicle registered in the entering vehicle information stored in the storage unit 12 (S24). Then, the processing apparatus 10 determines an entering vehicle being a vehicle identical with the exiting vehicle, based on the result of the first collation processing in S21 and a result of the second collation processing in S24 (S25).

"Advantageous Effect"

The processing apparatus 10 according to the present example embodiment determines correspondence between an entering vehicle and an exiting vehicle through collation processing based on license plate information and supplemental information. By utilizing other supplemental information in addition to the license plate information, accuracy in determining the correspondence between the entering vehicle and the exiting vehicle is improved.

Further, when at least one of a result of the first collation processing and reliability of the license plate information does not meet a criterion, the processing apparatus 10 according to the present example embodiment performs collation processing based on the supplemental information. Since the collation based on the supplemental information is only performed when necessary, a processing burden on a computer can be reduced.

### <Second Example Embodiment>

In the present example embodiment, "supplemental information", "second collation processing", and "processing of determining an entering vehicle being identical with an exiting vehicle, based on a result of first collation processing and a result of second collation processing" will be more specifically described.

"Supplemental information" includes at least one of a feature value of appearance of a vehicle, a feature value of appearance of a passenger on the vehicle, and identification information of a mobile terminal existing in the vehicle.

A "feature value of appearance of a vehicle" is information indicating a feature of appearance of the vehicle. A type of the feature value is not specifically limited, and any technique can be utilized. For example, a keypoint for keypoint matching detected based on a predetermined rule may be detected as the feature value of appearance of each vehicle. Alternatively, an item that may be different for each vehicle or each vehicle type, such as a vehicle color, a vehicle width, a vehicle height, a ratio of the vehicle width and the vehicle height, and a shape of a wheel may be detected as the feature vale of appearance of each vehicle.

Acquisition of such a feature value of appearance of a vehicle is achieved by utilizing any technique. For example, a camera installed at an entrance gate and the like through which an entering vehicle passes captures appearance of the entering vehicle. Then, an entry processing unit 11 analyzes an image generated by the camera, and thereby acquires a feature value of the appearance of the vehicle.

A "feature value of appearance of a passenger on a vehicle" is a feature value of a face of the passenger, a feature value of clothing of the passenger, and the like. Acquisition of such a feature value of appearance of a passenger on a vehicle is achieved by utilizing any technique. For example, a camera installed at an entrance gate and the like through which an entering vehicle passes captures the entering vehicle. Then, the entry processing unit 11 analyzes an image generated by the camera, and thereby acquires a feature value of appearance of a passenger on the vehicle. Note that, when there are a plurality of passengers on the vehicle, the entry processing unit 11 may acquire feature values of appearance of all the plurality of passengers. Alternatively, the entry processing unit 11 may acquire a feature value of appearance of a representative person among the plurality of passengers. The representative person is exemplified by, for example, a person sitting in a driver's seat, and the like, but is not limited thereto.

"Identification information of a mobile terminal existing in a vehicle" is identification information of a terminal possessed by a passenger, such as a smartphone, a tablet terminal, a smartwatch, a mobile phone, a portable game console, and a laptop computer. An example of such identification information includes a media access control (MAC) address, a user identification information for an application installed on the mobile terminal, and the like, but is not limited thereto.

Acquisition of such identification information of a mobile terminal is achieved by utilizing any technique. For example, a short-range wireless communication device is installed at an entrance gate and the like through which an entering vehicle passes. Then, the short-range wireless communication device communicates with a mobile terminal existing in the entering vehicle passing a predetermined point, and acquires identification information of the mobile terminal from the mobile terminal.

When at least one of a result of first collation processing and reliability of license plate information does not meet the above-described criterion, a second collation unit 16 performs second collation processing of collating supplemental information of an exiting vehicle with each piece of supplemental information of entering vehicles stored in a storage unit 12 (see Fig. 3). Further, the second collation unit 16 can compute a second collation score for each pair of the exiting vehicle and each of the entering vehicles.

For example, the second collation unit 16 computes a similarity between a feature value of appearance of an exiting vehicle and a feature value of appearance of an entering vehicle. In this case, the higher the similarity, the higher a second collation score can be computed by the second collation unit 16.

As another example, the second collation unit 16 computes a similarity between a feature value of a passenger on the exiting vehicle and a feature value of a passenger on the entering vehicle. In this case, the higher the similarity, the higher the second collation score can be computed by the second collation unit 16.

As yet another example, the second collation unit 16 decides whether identification information of a mobile terminal inside the exiting vehicle matches identification information of a mobile terminal inside the entering vehicle. In this case, when these pieces of identification information matches, the second collation unit 16 can compute a higher second collation score than a second collation score computed when these pieces of identification information do not match.

As yet another example, the second collation unit 16 may perform the second collation processing, based on a plurality of a feature value of appearance of a vehicle, a feature value of appearance of a passenger on the vehicle, and identification information of a mobile terminal inside the vehicle. Also in this case, the second collation unit 16 can compute the second collation score, based on a criterion similar to the above described criterion.

When at least one of the result of the first collation processing and the reliability of the license plate information does not meet the above described criterion, a second determination unit 17 determines an entering vehicle being a vehicle identical with an exiting vehicle, based on the result of the first collation processing and a result of the second collation processing. In the following, one example of processing of determining an entering vehicle being a vehicle identical with an exiting vehicle, based on the result of the first collation processing and the result of the second collation processing, will be described. The second determination unit 17 can execute, for example, the following first or second determination example.

### -First Determination Example-

The second determination unit 17 computes a similarity score for each pair of the exiting vehicle and each of the entering vehicle stored in the storage unit 12, based on the first collation score being a result of the first collation processing and the reliability of the license plate information. The similarity score is a value generally evaluating the result of the first collation processing and reliability of a license plate. Although there are various methods for computing the similarity score, the higher the first collation score and the higher the reliability of the license plate information, the higher the similarity score.

Further, the second determination unit 17 extracts an entering vehicle of a pair of which similarity score is equal to or more than a threshold value, as a candidate of a vehicle being identical with the exiting vehicle. The threshold value of similarity score is a lower limit value of the similarity score on which a vehicle is allowable to be extracted as a candidate of the vehicle being identical with the exiting vehicle.

When there is one extracted candidate, the second determination unit 17 determines the one extracted entering vehicle as a vehicle identical with the exiting vehicle.

On the other hand, when there are a plurality of extracted candidates, the second determination unit 17 determines, from the plurality of extracted entering vehicles, an entering vehicle being a vehicle identical with the exiting vehicle, based on a result of the second collation processing. For example, the second determination unit 17 can determine an entering vehicle having the highest second collation score described above as a vehicle identical with the exiting vehicle, among the plurality of extracted entering vehicles. Alternatively, the second determination unit 17 may determine an entering vehicle having a highest total collation score described in the following second determination example as a vehicle identical with the exiting vehicle, among the plurality of extracted entering vehicles. Alternatively, the second determination unit 17 may determine, from among the plurality of extracted entering vehicles, "an entering vehicle that at least one of passengers on the exiting vehicle was on board", "an entering vehicle from which at least one of pieces of identification information of a mobile terminal detected from the exiting vehicle is detected", and the like as a vehicle identical with the exiting vehicle.

Alternatively, when there are a plurality of extracted candidates, the second determination unit 17 may determine an entering vehicle being a vehicle identical with the exiting vehicle from among the plurality of extracted entering vehicles, through the following processing. First, the second determination unit 17 determines "an entering vehicle from which at least one of pieces of identification information of a mobile terminal detected from the exiting vehicle is detected" as a vehicle being a vehicle identical with the exiting vehicle. Further, when no entering vehicle that meets the condition exists in the plurality of extracted candidates, the second determination unit 17 extracts, based on a similarity between a feature value of appearance of the exiting vehicle and a feature value of appearance of each entering vehicle, an entering vehicle having the highest similarity and an entering vehicle having the second highest similarity, from the plurality of extracted candidates. Then, when a difference between the similarities of the two extracted entering vehicles is equal to or more than a given value, the second determination unit 17 determines the entering vehicle having the highest similarity as a vehicle being identical with the exiting vehicle. On the other hand, when the difference between the similarities of the two extracted entering vehicles is less than the given value, the second determination unit 17 extracts, based on a similarity between a feature value of appearance of a passenger on the exiting vehicle and a feature value of appearance of a passenger on each entering vehicle, an entering vehicle having the highest similarity, from the plurality of extracted candidates. Then, the second determination unit 17 determines the entering vehicle having the highest similarity as a vehicle identical with the exiting vehicle.

### -Second Determination Example-

The second determination unit 17 computes a total collation score for each pair of an exiting vehicle and each entering vehicle, based on a first collation score and a second collation score. Although there are various methods for computing the total collation score, the higher the first collation score and the higher the second collation score, the higher the total collation score.

Then, the second determination unit 17 determines an entering vehicle of a pair having the highest total collation score as a vehicle identical with an exiting vehicle of the pair.

Next, one example of a flow of processing performed by the processing apparatus 10 will be described.

A flow of processing executed when a vehicle enters a facility is similar to that in the first example embodiment.

The flow of the processing executed when a vehicle enters a facility is described in the flowchart in Fig. 5 of the first example embodiment. In S25, for example, the processing apparatus 10 can execute the above-described first or second determination example.

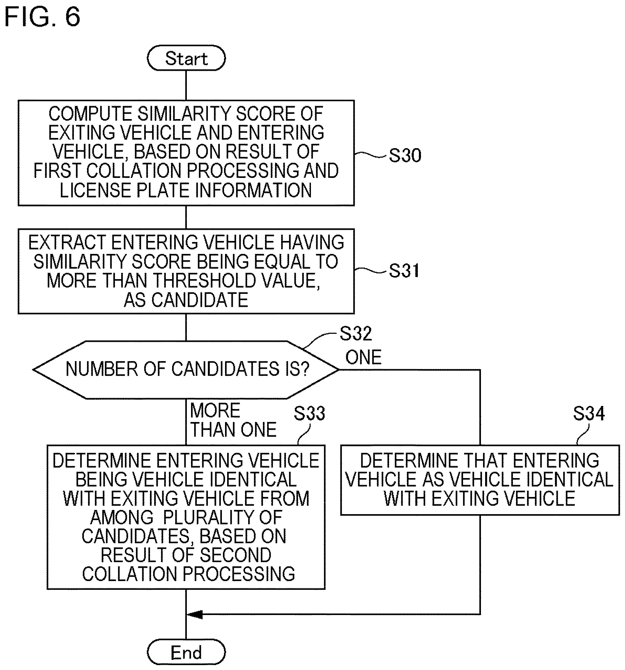

Herein, one example of processing in S25 in the flowchart in Fig. 5 will be described with reference to a flowchart in Fig. 6. Specifically, a flow of processing of the above-described first determination example will be described.

The processing apparatus 10 computes a similarity score for each pair of the exiting vehicle and each entering vehicle stored in the storage unit 12, based on a first collation score being a result of the first collation processing in S21 and reliability of license plate information (S30). Then, the processing apparatus 10 extracts an entering vehicle of a pair of which similarity score is equal to or more than a threshold value as a candidate of a vehicle identical with the exiting vehicle (S31).

When there is one extracted candidate ("one" in S32), the processing apparatus 10 determines the one extracted entering vehicle as a vehicle identical with the exiting vehicle (S34).

On the other hand, when there are a plurality of extracted candidates ("more than one" in S32), the processing apparatus 10 determines an entering vehicle being a vehicle identical with the exiting vehicle from among the plurality of extracted entering vehicles, based on a result of the second collation processing (S33). For example, the processing apparatus 10 can determine an entering vehicle having the highest second collation score as a vehicle identical with the exiting vehicle, from among the plurality of extracted entering vehicles. Alternatively, the processing apparatus 10 may determine an entering vehicle having the highest total collation score described in the above-described second determination example as a vehicle identical with the exiting vehicle, from among the plurality of extracted entering vehicles. Alternatively, the processing apparatus 10 may determine, from among the plurality of extracted entering vehicles, "an entering vehicle that at least one of passengers on the exiting vehicle was on board", "an entering vehicle from which one of pieces of identification information of a mobile terminal detected from the exiting vehicle is detected", and the like as a vehicle identical with the exiting vehicle.

Alternatively, the processing apparatus 10 may execute the following processing as the processing in S33. First, the processing apparatus 10 determines "an entering vehicle from which one of pieces of identification information of a mobile terminal detected from the exiting vehicle is detected" as a vehicle identical with the exiting vehicle. Further, when no entering vehicle that meets the condition exists in the plurality of extracted candidates, the processing apparatus 10 extracts, based on a similarity between a feature value of appearance of the exiting vehicle and a feature value of appearance of each entering vehicle, an entering vehicle having the highest similarity and an entering vehicle having the second highest similarity, from the plurality of extracted candidates. Then, when a difference between the similarities of the two extracted entering vehicles is equal to or more than a given value, processing apparatus 10 determines the entering vehicle having the highest similarity as a vehicle identical with the exiting vehicle. On the other hand, when the difference between the similarities of the two extracted entering vehicles is less than the given value, the processing apparatus 10 extracts, based on a similarity between a feature value of appearance of a passenger on the exiting vehicle and a feature value of appearance of a passenger on each entering vehicle, an entering vehicle having the highest similarity, from the plurality of extracted candidates. Then, the processing apparatus 10 determines the entering vehicle having the highest similarity as a vehicle identical with the exiting vehicle.

Other configuration of the processing apparatus 10 according to the present example embodiment is similar to that in the first example embodiment.

According to the processing apparatus 10 of the present example embodiment, an advantageous effect similar to that of the first example embodiment is achieved. Further, the processing apparatus 10 according to the present example embodiment can utilize in collation, at least one of a feature value of appearance of a vehicle, a feature value of a passenger on the vehicle, and identification information of a mobile terminal existing in the vehicle, as supplemental information. By utilizing such characteristic information as the supplemental information, accuracy in determining correspondence between an entering vehicle and an exiting vehicle is improved.

Further, the processing apparatus 10 according to the present example embodiment can utilize in collation, identification information of a mobile terminal existing in the vehicle, as the supplemental information. While license plate information is acquired by performing an image analysis, the identification information of a mobile terminal is acquired through a method different from the image analysis, specifically, short-range wireless communication with the mobile terminal. By utilizing various types of information acquired through various methods in collation, even when one type of information is not successfully acquired, the failure can be compensated based on another type of information that is successfully acquired.

### <Third Example Embodiment>

A processing apparatus 10 according to the present example embodiment further includes a function of performing decision of a billed amount, and the like, based on entry information indicating an entry feature and exit information indicating an exit feature, after determining correspondence between an entering vehicle and an exiting vehicle.

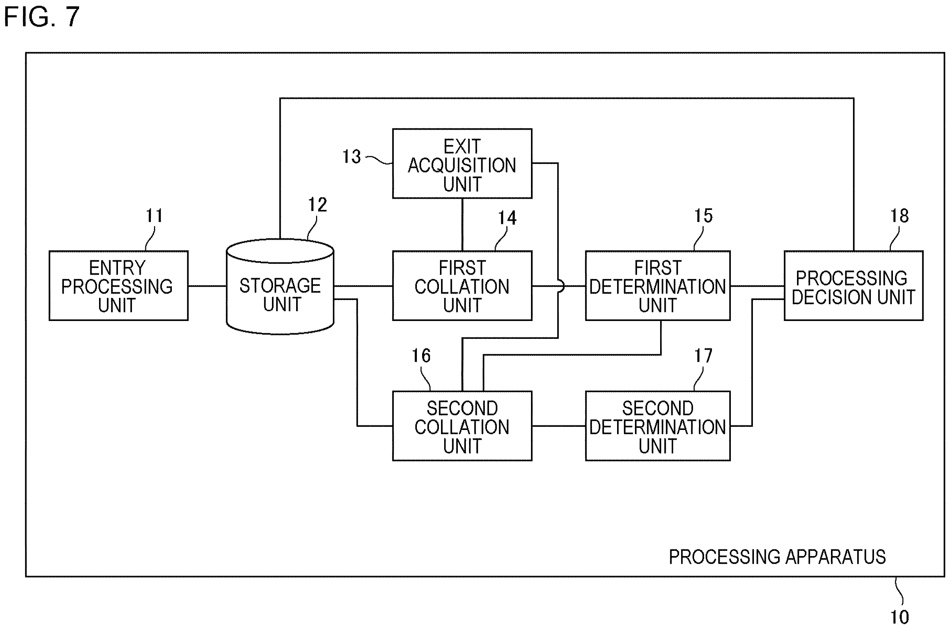

One example of a functional block diagram of the processing apparatus 10 according to the present example embodiment is illustrated in Fig. 7. As illustrated, the processing apparatus 10 includes an entry processing unit 11, a storage unit 12, an exit acquisition unit 13, a first collation unit 14, a first determination unit 15, a second collation unit 16, a second determination unit 17, and a processing decision unit 18. Note that, the processing apparatus 10 may not include the storage unit 12. In this case, an external apparatus configured in such a way as to be communicable with the processing apparatus 10 includes the storage unit 12.

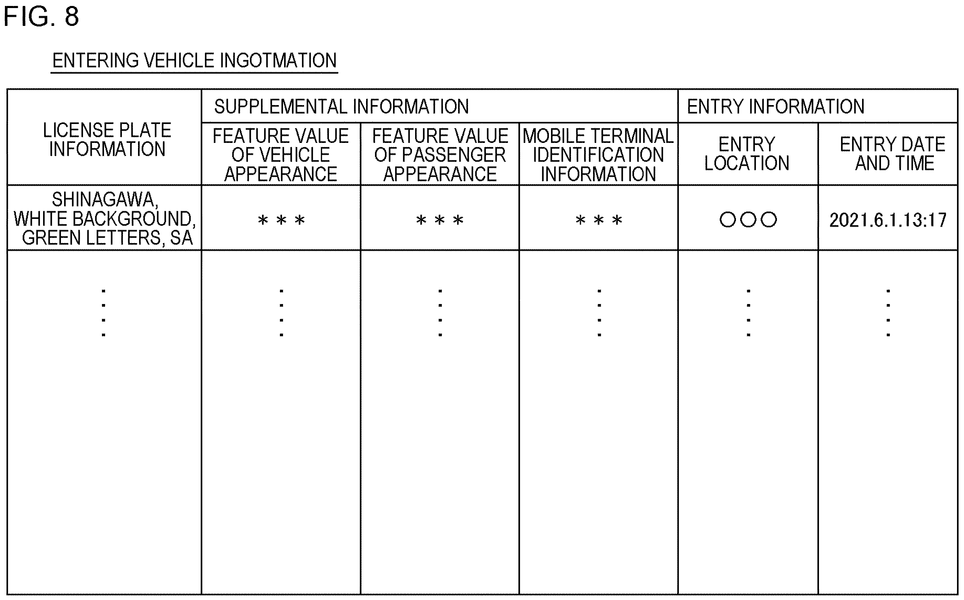

As illustrated in Fig. 8, the entry processing unit 11 associates entry information indicating an entry feature of an entering vehicle with license plate information and supplemental information of the entering vehicle, and stores the associated information in the storage unit 12.

The entry information includes at least one of entry location information indicating an entry location and entry date and time information indicating an entry date and time. When there are a plurality of entrances and it is necessary to manage which entrance a vehicle entered from, such as for a toll road, the entry information includes the entry location information. Further, when it is necessary to manage a time length for which a vehicle stayed in a facility, such as for a parking lot, the entry information includes the entry date and time information. Such entry information is generated by determining a gate through which an entering vehicle passes and a date and time at which the entering vehicle passes the gate.

After an entering vehicle being a vehicle identical with an exiting vehicle is determined, the processing decision unit 18 decides a content of processing performed on the vehicle, based on entry information of the determined entering vehicle and exit information indicating an exit feature of the exiting vehicle.

The exit information includes at least one of exit location information indicating an exit location and exit date and time information indicating an exit date and time. When there are a plurality of exits and it is necessary to manage which exit a vehicle exited from, such as for a toll road, the exit information includes the exit location information. Further, when it is necessary to manage a time length for which a vehicle stayed in a facility, such as for a parking lot, the exit information includes the exit date and time information. Such exit information is generated by determining a gate through which an exiting vehicle passes and a date and time at which the exiting vehicle passes the gate.

The processing decision unit 18 may decide a billed amount, for example, based on an entry location indicated by the entry information and an exit location indicated by the exit information. Note that, the processing apparatus 10 may determine other pieces of attribute information such as a vehicle type and a weight of the entering vehicle and the exiting vehicle by utilizing any conventional method. Further, the processing decision unit 18 may decide the billed amount, further in consideration of the above-described attribute information of the vehicle, in addition to the entry location indicated by the entry information and the exit location indicated by the exit information. The decision of the billed amount is achieved by utilizing any technique, such as reference to a table indicating a relation between an entry location, exit location, and a billed amount.

Alternatively, the processing decision unit 18 may decide the billed amount, for example, based on an entry date and time indicated by the entry information and an exit date and time indicated by the exit information. Note that, the processing apparatus 10 may determine other pieces of attribute information such as a vehicle type and a weight of the entering vehicle and the exiting vehicle by utilizing any conventional method. Further, the processing decision unit 18 may deicide the billed amount, further in consideration of the above-described attribute information of the vehicle, in addition to the entry date and time indicated by the entry information and the exit date and time indicated by the exit information. The decision of the billed amount is achieved by utilizing any technique, such as reference to a table indicating a relation between a time length of stay and a billed amount.

After that, through ay means, request for payment of the decided billed amount, payment processing for the decided billed amount, and the like is performed. For example, credit card information may preliminarily be registered in the processing apparatus 10, in association with license plate information of a vehicle. Then, the processing apparatus 10 may perform payment processing for the decided billed amount by utilizing the credit card information.

Alternatively, an address (a user name, an address, an e-mail address, and the like) to which an invoice is sent may be registered in association with the license plate information of the vehicle. Further, an invoice for payment of the decided billed amount may be sent to a user via mail, e-mail, or the like.

Other configuration of the processing apparatus 10 according to the present example embodiment is similar to that in the first and second example embodiments. According to the processing apparatus 10 of the present example embodiment, an advantageous effect similar to that of the first and second example embodiments is achieved.

### <Fourth Example Embodiment>

The processing apparatus 10 according to the present example embodiment determines correspondence between an entering vehicle and an exiting vehicle through collation processing based on license plate information and supplemental information, as in the first to third example embodiments. However, the processing apparatus 10 according to the present example embodiment differs from the first to third example embodiments in a flow of the collation processing based on the license plate information and the supplemental information.

A flow of processing performed when a vehicle enters a facility is similar to that in the first to third example embodiments.

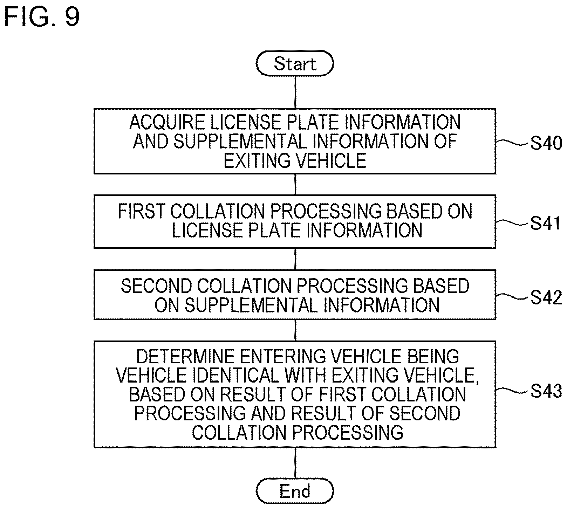

Next, a flow of processing performed when a vehicle exits from the facility will be described with reference to Fig. 9.

The processing apparatus 10 acquires license plate information and supplemental information of an exiting vehicle (S40). For example, acquisition of the license plate information and the supplemental information of the exiting vehicle by the processing apparatus 10 is achieved through analysis of an image generated by a camera installed at an exit gate or the like through which the exiting vehicle passes, communication between a short-range wireless communication device installed at the exit gate and the like and a mobile terminal existing in the exiting vehicle, and the like.

Next, the processing apparatus 10 executes first collation processing of collating the license plate information of the exiting vehicle with license plate information of each entering vehicle registered in entering vehicle information stored in a storage unit 12 (S41). Further, the processing apparatus 10 executes second collation processing of collating the supplemental information of the exiting vehicle with supplemental information of each entering vehicle registered in the entering vehicle information stored in the storage unit 12 (S42). Note that, a processing order of S41 and S42 is not limited to this order. Details of the first collation processing and the second collation processing are similar to those in the first and second example embodiments.

After that, the processing apparatus 10 determines an entering vehicle being a vehicle identical with the exiting vehicle, based on a result of the first collation processing in S41 and a result of the second collation processing in S42 (S43). The processing in S43 is similar to that in S25 in Fig. 25. Specifically, in S43, the processing apparatus 10 can execute the first or second determination example described in the first example embodiment.

Other configuration of the processing apparatus 10 according to the present example embodiment is similar to that of the first and second example embodiments.

The processing apparatus 10 according to the present example embodiment determines correspondence between an entering vehicle and an exiting vehicle through collation processing based on license plate information and supplemental information. By utilizing other supplemental information in addition to the license plate information, accuracy in determining the correspondence between the entering vehicle and the exiting vehicle is improved.

Further, the processing apparatus 10 according to the present example embodiment can utilize in collation, at least one of a feature value of appearance of a vehicle, a feature value of a passenger on the vehicle, and identification information of a mobile terminal existing in the vehicle, as the supplemental information. By utilizing such characteristic information as the supplemental information, accuracy in determining the correspondence between the entering vehicle and the exiting vehicle is improved.

Further, the processing apparatus 10 according to the present example embodiment can utilize in collation, identification information of a mobile terminal existing in a vehicle, as the supplemental information. While the license plate information is acquired by performing an image analysis, the identification information of a mobile terminal is acquired through a method different from the image analysis, specifically, short-range wireless communication with the mobile terminal. By utilizing various types of information acquired through various methods in collation, even when one type of information is not successfully acquired, the failure can be compensated based on another type of information that is successfully acquired.

Note that, in the present specification, "acquisition" includes at least one of: "fetching, by an own device, data stored in another apparatus or a storage medium (active acquisition)", based on a user input or based on a program instruction, for example, receiving by requesting or querying another apparatus, reading by accessing another apparatus or a storage medium, and the like; "inputting data being output from another apparatus to an own device (passive acquisition)", based on a user input or based on a program instruction, for example, receiving data that are distributed (transmitted, push-notified, or the like), or selecting and acquiring from among the received data or information; and "generating new data by editing data (conversion to text, data rearrangement, partial extraction of data, change in a file format, and the like) and acquiring the new data.

A part or the entirety of the above-described example embodiments may be described as the following supplementary notes, but is not limited thereto.
1. A processing apparatus, including:
   an entry processing means for acquiring license plate information of an entering vehicle and supplemental information related to the entering vehicle, associating the license plate information and the supplemental information with each other, and storing the associated information in a storage means;
   an exit acquisition means for acquiring the license plate information and the supplemental information of an exiting vehicle;
   a first collation means for performing first collation processing of collating the license plate information of the exiting vehicle with the license plate information of the entering vehicle stored in the storage means;
   a first determination means for determining, when both of a result of the first collation processing and reliability of the license plate information meet a criterion, the entering vehicle being a vehicle identical with the exiting vehicle, based on the result of the first collation processing;
   a second collation means for performing, when at least one of the result of the first collation processing and the reliability of the license plate information does not meet the criterion, second collation processing of collating the supplemental information of the exiting vehicle with the supplemental information of the entering vehicle stored in the storage means; and
   a second determination means for determining, when at least one of the result of the first collation processing and the reliability of the license plate information does not meet the criterion, the entering vehicle being a vehicle identical with the exiting vehicle, based on the result of the first collation processing and a result of the second collation processing.
2. The processing apparatus according to supplementary note 1, wherein
   the supplemental information is identification information of a mobile terminal acquired from the mobile terminal exiting in a vehicle passing a predetermined point.
3. The processing apparatus according to supplementary note 1 or 2, wherein
   the supplemental information is a feature vale of appearance of a vehicle.
4. The processing apparatus according to any one of supplementary notes 1 to 3, wherein
   the supplemental information is a feature value of appearance of a passenger on a vehicle.
5. The processing apparatus according to any one of supplementary notes 1 to 4, wherein
   the second determination means
   computes, based on the result of the first collation processing and the reliability of the license plate information, a similarity score of the exiting vehicle and each of the entering vehicles stored in the storage means,
   extracts the entering vehicle having the similarity score being equal to or more than a threshold value, as a candidate for a vehicle identical with the exiting vehicle,
   when the extracted candidate is one, determines the one extracted entering vehicle as a vehicle identical with the exiting vehicle, and,
   when there are a plurality of the extracted candidates, determines the entering vehicle being a vehicle identical with the exiting vehicle, from among the plurality of extracted entering vehicles, based on the result of the second collation processing.
6. The processing apparatus according to any one of supplementary notes 1 to 5, wherein
   the entry processing means associates entry information indicating an entry feature of the entering vehicle with the license plate information and the supplemental information, and stores the associated information in the storage means,
   the processing apparatus further including
   a processing decision means for deciding, after the entering vehicle being a vehicle identical with the exiting vehicle is determined, a content of processing performed on the vehicle, based on the entry information of the determined entering vehicle and exit information indicating an exit feature of the exiting vehicle.
7. The processing apparatus according to supplementary note 6, wherein
   the entry information indicates an entry location, and the exit information indicates an exit location, and
   the processing decision means decides a billed amount, based on the entry location and the exit location.
8. The processing apparatus according to supplementary note 6, wherein
   the entry information indicates an entry date and time, and the exit information indicates an exit date and time, and
   the processing decision means decides a billed amount, based on the entry date and time and the exit date and time.
9. A processing method including,
   by a computer, executing:
   an entry processing step of acquiring license plate information of an entering vehicle and supplemental information related to the entering vehicle, associating the license plate information and the supplemental information with each other, and storing the associated information in a storage means;
   an exit acquisition step of acquiring the license plate information and the supplemental information of an exiting vehicle;
   a first collation step of performing first collation processing of collating the license plate information of the exiting vehicle with the license plate information of the entering vehicle stored in the storage means;
   a first determination step of determining, when both of a result of the first collation processing and reliability of the license plate information meet a criterion, the entering vehicle being a vehicle identical with the exiting vehicle, based on the result of the first collation processing;
   a second collation step of performing, when at least one of the result of the first collation processing and the reliability of the license plate information does not meet the criterion, second collation processing of collating the supplemental information of the exiting vehicle with the supplemental information of the entering vehicle stored in the storage means; and
   a second determination step of determining, when at least one of the result of the first collation processing and the reliability of the license plate information does not meet the criterion, the entering vehicle being a vehicle identical with the exiting vehicle, based on the result of the first collation processing and a result of the second collation processing.
10. A program causing a computer to function as:
   an entry processing means for acquiring license plate information of an entering vehicle and supplemental information related to the entering vehicle, associating the license plate information and the supplemental information with each other, and storing the associated information in a storage unit;
   an exit acquisition means for acquiring the license plate information and the supplemental information of an exiting vehicle;
   a first collation means for performing first collation processing of collating the license plate information of the exiting vehicle with the license plate information of the entering vehicle stored in the storage unit;
   a first determination means for determining, when both of a result of the first collation processing and reliability of the license plate information meet a criterion, the entering vehicle being a vehicle identical with the exiting vehicle, based on the result of the first collation processing;
   a second collation means for performing, when at least one of the result of the first collation processing and the reliability of the license plate information does not meet the criterion, second collation processing of collating the supplemental information of the exiting vehicle with the supplemental information of the entering vehicle stored in the storage unit; and
   a second determination means for determining, when at least one of the result of the first collation processing and the reliability of the license plate information does not meet the criterion, the entering vehicle being a vehicle identical with the exiting vehicle, based on the result of the first collation processing and a result of the second collation processing.

This application is based upon and claims the benefit of priority from Japanese patent application No. 2021-095759, filed on June 8, 2021, the disclosure of which is incorporated herein in its entirety by reference. Reference Signs List

- 10: Processing apparatus
- 11: Entry processing unit
- 12: Storage unit
- 13: Exit acquisition unit
- 14: First collation unit
- 15: First determination unit
- 16: Second collation unit
- 17: Second determination unit
- 18: Processing decision unit
- 1A: Processor
- 2A: Memory
- 3A: Input/output I/F
- 4A: Peripheral circuit
- 5A: Bus

## Claims

1. A processing apparatus, comprising:
an entry processing means for acquiring license plate information of an entering vehicle and supplemental information related to the entering vehicle, associating the license plate information and the supplemental information with each other, and storing the associated information in a storage means;
an exit acquisition means for acquiring the license plate information and the supplemental information of an exiting vehicle;
a first collation means for performing first collation processing of collating the license plate information of the exiting vehicle with the license plate information of the entering vehicle stored in the storage means;
a first determination means for determining, when both of a result of the first collation processing and reliability of the license plate information meet a criterion, the entering vehicle being a vehicle identical with the exiting vehicle, based on the result of the first collation processing;
a second collation means for performing, when at least one of the result of the first collation processing and the reliability of the license plate information does not meet the criterion, second collation processing of collating the supplemental information of the exiting vehicle with the supplemental information of the entering vehicle stored in the storage means; and
a second determination means for determining, when at least one of the result of the first collation processing and the reliability of the license plate information does not meet the criterion, the entering vehicle being a vehicle identical with the exiting vehicle, based on the result of the first collation processing and a result of the second collation processing.

2. The processing apparatus according to claim 1, wherein
the supplemental information is identification information of a mobile terminal acquired from the mobile terminal existing in a vehicle passing a predetermined point.

3. The processing apparatus according to claim 1 or 2, wherein
the supplemental information is a feature value of appearance of a vehicle.

4. The processing apparatus according to any one of claims 1 to 3, wherein
the supplemental information is a feature value of appearance of a passenger on a vehicle.

5. The processing apparatus according to any one of claims 1 to 4, wherein the second determination means
computes, based on the result of the first collation processing and the reliability of the license plate information, a similarity score of the exiting vehicle and each of the entering vehicles stored in the storage means,
extracts the entering vehicle having the similarity score being equal to or more than a threshold value, as a candidate for a vehicle identical with the exiting vehicle,
when the extracted candidate is one, determines the one extracted entering vehicle as a vehicle identical with the exiting vehicle, and,
when there are a plurality of the extracted candidates, determines the entering vehicle being a vehicle identical with the exiting vehicle, from among the plurality of extracted entering vehicles, based on the result of the second collation processing.

6. The processing apparatus according to any one of claims 1 to 5, wherein
the entry processing means associates entry information indicating an entry feature of the entering vehicle with the license plate information and the supplemental information, and stores the associated information in the storage means,
the processing apparatus further comprising
a processing decision means for deciding, after the entering vehicle being a vehicle identical with the exiting vehicle is determined, a content of processing performed on the vehicle, based on the entry information of the determined entering vehicle and exit information indicating an exit feature of the exiting vehicle.

7. The processing apparatus according to claim 6, wherein
the entry information indicates an entry location, and the exit information indicates an exit location, and
the processing decision means decides a billed amount, based on the entry location and the exit location.

8. The processing apparatus according to claim 6, wherein
the entry information indicates an entry date and time, and the exit information indicates an exit date and time, and
the processing decision means decides a billed amount, based on the entry date and time and the exit date and time.

9. A processing method comprising,
by a computer, executing:
an entry processing step of acquiring license plate information of an entering vehicle and supplemental information related to the entering vehicle, associating the license plate information and the supplemental information with each other, and storing the associated information in a storage means;
an exit acquisition step of acquiring the license plate information and the supplemental information of an exiting vehicle;
a first collation step of performing first collation processing of collating the license plate information of the exiting vehicle with the license plate information of the entering vehicle stored in the storage means;
a first determination step of determining, when both of a result of the first collation processing and reliability of the license plate information meet a criterion, the entering vehicle being a vehicle identical with the exiting vehicle, based on the result of the first collation processing;
a second collation step of performing, when at least one of the result of the first collation processing and the reliability of the license plate information does not meet the criterion, second collation processing of collating the supplemental information of the exiting vehicle with the supplemental information of the entering vehicle stored in the storage means; and
a second determination step of determining, when at least one of the result of the first collation processing and the reliability of the license plate information does not meet the criterion, the entering vehicle being a vehicle identical with the exiting vehicle, based on the result of the first collation processing and a result of the second collation processing.

10. A program causing a computer to function as:
an entry processing means for acquiring license plate information of an entering vehicle and supplemental information related to the entering vehicle, associating the license plate information and the supplemental information with each other, and storing the associated information in a storage means;
an exit acquisition means for acquiring the license plate information and the supplemental information of an exiting vehicle;
a first collation means for performing first collation processing of collating the license plate information of the exiting vehicle with the license plate information of the entering vehicle stored in the storage means;
a first determination means for determining, when both of a result of the first collation processing and reliability of the license plate information meet a criterion, the entering vehicle being a vehicle identical with the exiting vehicle, based on the result of the first collation processing;
a second collation means for performing, when at least one of the result of the first collation processing and the reliability of the license plate information does not meet the criterion, second collation processing of collating the supplemental information of the exiting vehicle with the supplemental information of the entering vehicle stored in the storage means; and
a second determination means for determining, when at least one of the result of the first collation processing and the reliability of the license plate information does not meet the criterion, the entering vehicle being a vehicle identical with the exiting vehicle, based on the result of the first collation processing and a result of the second collation processing.
